# EUROPEAN PATENT APPLICATION

(11) **EP 2 851 243 A1**
(43) Date of publication of application: **25.03.2015**
(21) Application number: 13185370.7
(22) Date of filing: 20.09.2013
(51) Int. Cl.: B60R 11/04, B60S 1/08, B60S 1/56, G03B 17/08, H04N 5/225

(54) **Vision system for a vehicle**

(71) Applicant: Orlaco Products B.V., 3772 MN Barneveld (NL)
(72) Inventor: van den Brink, Alfred, 3772 MN Barneveld (NL)
(74) Representative: Nederlandsch Octrooibureau

(57) **Abstract**

A vision system (1) for providing exterior rear view for a vehicle driver, the system comprising;
- an image capturing device (2) supported by a hingeable support frame (13) for hinging the image capturing device (2) around a central axis (3) of the vision system (1) for adjusting the view of the vision system (1);

- a housing (6) for accommodating the image capturing device therein, the housing (6) comprising a first stationary housing part (5) and a second housing part (4) coupled with the first stationary housing part (5) for accommodating the image capturing device in the housing (6), and wherein the second housing part (4) comprises an entrance window (7) for allowing an image to be captured by the image capturing device, and wherein the second housing part (4) is moveable coupled with the first stationary housing part (5) for cleaning the entrance window (7) of the second housing part (4),

- a cleaning device (8) coupled with the first stationary housing part and arranged for cleaning the entrance window,

- a mechanical adjusting device (9) comprising a drive system (10) for adjusting the view of the vision system,

wherein the drive system is coupled with both the hingeable support frame for adjusting the angular position of the image capturing device, and with the second housing part for moving the entrance window with respect to the cleaning device.

## Description

### Background

The present invention relates to a vision system for providing exterior rear view for a vehicle driver, the system comprising an image capturing device like a camera.

Such a system is known from EP1728381 which discloses a driver vision enhancing system having a variable field of regard and a method of controlling the field of regard of a driver vision enhancing system. The system includes a housing, a movable sensor assembly located within the housing, a radiation detector connected to one end of the sensor assembly, and an actuator connected to the housing and able to contact the sensor assembly to move the sensor assembly in the housing and thereby move the radiation detector. The method includes moving a radiation detector as part of a driver vision enhancing system in a vertical direction within an image plane of the driver vision enhancing system. In order to utilize a mirror in the periscopic DVE systems, an entrance window is positioned in front of the mirror to prevent dust and contaminants from reaching the mirror. EP1728381 is silent about the cleanness of the entrance window itself.

From DE10251661A1 a motor vehicle is known having at least the camera optics mounted on a windscreen wiper or part of a windscreen wiper. The camera optics are mounted on a drive axle of a wiper arm. The drive axle is hollow and the camera optics is arranged inside the axle. A wiper blade wipes the camera optics when the wiper arm is moving back and forth.

In EP 0 761 500 B1 a module has an image acquisition device e.g. a camera, mounted in a holding device in the form of a housing enclosing the image acquisition device and with a clear view plate, behind which the image acquisition device is arranged. The clear view plate has a cleaning device with a washing nozzle for the outer surface of the plate. The cleaning device can have an electric motor coupled to the rotatably mounted clear view plate via a transmission.

### Summary of the invention

The invention aims to provide a vision system for providing exterior rear view for a vehicle driver, wherein the vision system is able to adjust the field of view to a driver's need, guarantees clear vision unimpeded by possible contamination, while not increasing complexity of the vision system.

Another object of the invention is to improve an alternative vision system for providing rear view for a vehicle driver.

Yet another object of the invention is to provide a vision system for providing rear view for a vehicle driver wherein a problem with known vision systems is partly solved.

According to a first aspect of the invention this is realized with a vision system for providing exterior rear view for a vehicle driver, the system comprising;
- an image capturing device supported by a hingeable support frame for hinging the image capturing device around a central axis of the vision system for adjusting the view of the vision system,
- a housing for accommodating the image capturing device therein, the housing comprising a first stationary housing part and a second housing part coupled with the first stationary housing part for accommodating the image capturing device in the housing, and wherein the second housing part comprises an entrance window for allowing an image to be captured by the image capturing device, and wherein the second housing part is moveable coupled with the first stationary housing part for cleaning the entrance window of the second housing part,
- a cleaning device coupled with the first stationary housing part and arranged for cleaning the entrance window,
- a mechanical adjusting device comprising a drive system for adjusting the view of the vision system,
wherein the drive system is coupled with both the hingeable support frame for adjusting the angular position of the image capturing device, and with the second housing part for moving the entrance window with respect to the cleaning device.

The vision system according to the invention enables simple cleaning of an entrance window, adjusting the field of view and providing a low part count for the vision system. Also, the vision system enables simultaneously adjusting the image capturing device and its entrance window which is beneficial for the captured image. Also, position control of the entrance window is enabled which allows introduction of respective entrance window sections each suitable for respective circumstances.

The housing for accommodating the image capturing device therein is to say that it has a protective function for the image capturing device. It may be conceivable that apart from the said housing there may be other provisions as well to protect the image capturing device like a package of the image capturing device itself.

The cleaning device coupled with the first stationary housing part is to say that the cleaning device is stationary with respect to the second housing part comprising the entrance window such that while moving the second housing the entrance window moves along the cleaning device which enables to provide cleaning action of the cleaning device to the entire entrance window.

In an embodiment of the vision system, the drive system is directly coupled with the second housing part. This ensures even more unhindered cleaning of the entrance window.

In an embodiment of the vision system, the drive system is coupled with the hingeable support frame through a coupling device for uncoupling the drive system and the hingeable support frame when a desired field of view of the vision system is achieved. This enables cleaning of the entrance window without effect on the field of view of the vision system.

In an embodiment of the vision system, the coupling device comprises a friction coupling system for uncoupling the drive system and the hingeable support frame when a support frame driving force exceeds a driving force threshold. The friction coupling enables a simple decoupling of the drive system and the hingeable support frame.

In an embodiment, the vision system comprises a cam system coupled with the hingeable support frame and the first stationary housing part the for imposing at least one angular position to the hingeable support frame for providing a desired field of view for the vision system. The cam system defines the field of view of the vision system. The cam system is particularly useful in that the hingeable frame is moveable between a first stop and a second stop, both stops being part of the cam system. The first stop defines an inward angular position of the hingeable support frame wherein the field of view is more close by a vehicle equipped with the vision system. The second stop defines an outward angular position of the hingeable support frame wherein the field of view is more remote from a vehicle equipped with the vision system. Such a vision system having an adjustable field of view is referred to as class II in the technical field of vision systems for vehicles. Such vision system may prevent unwanted blind spots for a driver. The vision system may be beneficially used in other technical fields as well like, for example but not limited to, offshore technology.

In an embodiment, the vision system comprises a source of radiation for radiating the field of view, and wherein the entrance window comprises at least a first and a second entrance window section wherein the first entrance window section is suitable for use during daylight conditions and the second entrance window section is suitable for use in dim or darkness in conjunction with the source of radiation. These entrance window sections allow optimal choice of entrance window properties and provide an optimal view. The first entrance window section may for example filter infrared light. The source may for example emit infrared light to provide view in dim or darkness in conjunction with the second entrance window section

In an embodiment, the vision system comprises a control unit for controlling the position of the entrance window, wherein the image capturing device is operationally coupled with the control unit for providing a control signal from the image capturing signal to the control unit. This way, the image capturing device is beneficially used for positioning the entrance window.

In an embodiment of the vision system, the source of radiation is operationally coupled with the control unit, and the source of radiation is arranged for allowing at least a part of emitted radiation to affect directly on the image capturing device through the entrance window. In using the source of radiation to radiate on the image capturing device in a direct way, position control of the entrance window is even more improved.

In an embodiment, the vision system comprises a further image capturing device which is stationary arranged for providing a determined field of view. This allows the vision system to provide a stationary view as well as an adjustable view. In the field of vehicle visions system, the stationary field of view is often referred to as to class IV vision system.

In an embodiment of the vision system, the image capturing device and the further image capturing device are arranged such that the devices are aligned with the central axis.

In an embodiment of the vision system, the second housing part is gastight coupled with the first stationary housing part for filling the housing with gas, preferably for filling the housing with gas at an overpressure.

In an embodiment of the vision system, the second housing part extends around the image capturing device.

In an embodiment of the vision system, the second housing part is provided with a curvature.

In an embodiment of the vision system, the second housing part extends circumferential around the image capturing device.

In an embodiment of the vision system, the entrance window extends circumferential around the image capturing device.

In an embodiment, the vision system comprises a filling device for enabling filling the housing with gas.

In an embodiment, the vision system comprises a heating device for preventing condensation on the entrance window.

According to a further aspect of the invention this is realized with a method for operating a vision system according to the invention, comprising the step; cleaning the entrance window through rotating the second housing part with respect to the first stationary housing part for cleaning the entrance window of the second housing part.

In an embodiment, the method comprises adjusting the angular position of the image capturing device for adjusting the view of the vision system.

The invention further relates to a device comprising one or more of the characterising features described in the description and/or shown in the attached drawings.

The invention further relates to a method comprising one or more of the characterising features described in the description and/or shown in the attached drawings.

The various aspects discussed in this patent can be combined in order to provide additional advantageous advantages.

### Description of the drawings

The invention will be further elucidated referring to preferred embodiments shown in the drawings wherein shown in:
Fig. 1 in cross sectional side view a first embodiment of the vision system according to the invention; and
fig. 2 a side view, partly in cross section, of a second embodiment of the vision system according to the invention.

### Detailed description of embodiments

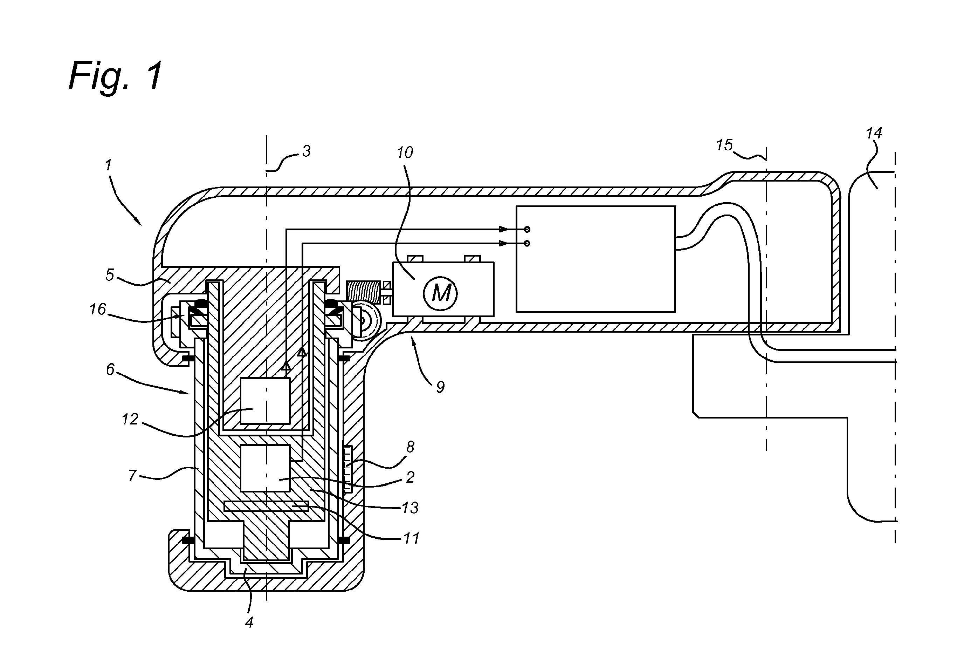

In the figure 1 a vision system 1 is shown for providing exterior rear view for a vehicle driver. The vision system 1 is hingebly coupled to a vehicle (not shown). The vision system 1 is hingeable around a folding axis 15. The vision system 1 is coupled with the vehicle through a bracket 14 which is not described in detail.

The vision system 1 comprises an image capturing device 2 like a camera or any other electronic image capturing device. The image capturing device 2 is supported by a hingeable support frame 13 for hinging the image capturing device 2 around a central axis 3 of the vision system 1 for adjusting the view of the vision system 1. The support frame 3 hinges with respect to a first stationary housing part 5.

The vision system 1 comprises a housing 6 for accommodating the image capturing device 2 therein. The housing 6 comprising a first stationary housing part 5 and a second housing part 4 coupled with the first stationary housing part 5 for accommodating the image capturing device in the housing 6. The first stationary housing part 5 and the second housing part 4do not necessarily form a closed housing since sealing of the image capturing device 2 may be provided in another way. The second housing part 4 comprises an entrance window 7 for allowing an image to be captured by the image capturing device 2. The second housing part 4 is moveable coupled with the first stationary housing part 5 for cleaning the entrance window 7 of the second housing part 4. The moveable second housing part 4 allow to move the entrance window 7 along a cleaning device 8 such that the entire entrance window 7 may be cleaned. The cleaning device is schematically depicted. Here, the second housing part 4 and its entrance window 7 do have a cylindrical shape to facilitate rotation around the central axis 3 and move the entrance window 7 along the stationary cleaning device 8.

The vision system 1 comprises a cleaning device 8 coupled with the first stationary housing part 5 and is arranged with respect to the second housing part 4 for cleaning the entrance window 7.

The vision system 1 comprises a mechanical adjusting device 9 comprising a drive system 10 for adjusting the view of the vision system. The drives system 10 may a fractional horse power dc -motor. The adjusting device 9 may comprise a gear train to adjust the speed of torque as desired. The drive system 10 is coupled with both the hingeable support frame 13 for adjusting the angular position of the image capturing device 2, and with the second housing part 4 for moving the entrance window 7 with respect to the cleaning device 8. Here, the drive system 10 is directly coupled with the second housing part 4 through the gear train.

In this case, the drive system 10 is coupled with the hingeable support frame 13 through a coupling device 16 for uncoupling the drive system 10 and the hingeable support frame 13 when a desired field of view of the vision system 1 is achieved. Here, the coupling device 16 is provided between the second housing part 4 and the support frame 13. Thus, the support frame 13 is coupled with the drive system through the second housing part 4.

Here, the coupling device 16 comprises a friction coupling system for uncoupling the drive system 10 and the hingeable support frame 13 when a support frame driving force exceeds a driving force threshold.

Here, the vision system 1 comprises a cam system (not shown) which is known per se. The cam system is coupled with the hingeable support frame 13 and the first stationary housing part 5for imposing at least one angular position to the hingeable support frame 13 for providing a desired field of view for the vision system 1.

Optionally, the vision system may comprise a source of radiation (not shown) for radiating the field of view of the vision system 1. In that case, the entrance window 7 may comprise at least a first and a second entrance window section wherein the first entrance window section is suitable for use during daylight conditions and the second entrance window section is suitable for use in dim or darkness in conjunction with the source of radiation.

A control unit (not shown) may be provided for controlling the position of the entrance window 7 with respect to the image capturing device 2. The image capturing device 2 is operationally coupled with the control unit for providing a control signal from the image capturing signal to the control unit. The source of radiation is operationally coupled with the control unit. The source of radiation is arranged for allowing at least a part of emitted radiation to affect directly on the image capturing device 2 through the entrance window 7. The source of radiation directly affecting the image capturing device 2 through the entrance window 7 allow a robust position control of the entrance window 7 and in particular the sections thereof.

The vision system comprises a further image capturing device 12 which is stationary arranged for providing a determined field of view. The further image capturing device 12 is stationary coupled with the first stationary housing part 5.

In this case, the image capturing device 2 and the further image capturing device 12 are arranged such that the devices are aligned with the central axis 3 of the visions system 1.

As an option, the second housing part is gastight coupled with the first stationary housing part for filling the housing with gas, preferably for filling the housing with gas at an overpressure.

Here, the second housing part 4 extends around the image capturing device 2, 12. The second housing part 4 is provided with a curvature. Here, the second housing part 4 extends circumferential around the image capturing device 2, 12. The entrance window 7 extends circumferential around the image capturing device 2, 12.

The vision system 1 may comprise a filling device (not shown) for enabling filling the housing with gas. The vision system 1 may comprise a heating device (not shown) for preventing condensation on the entrance window 7.

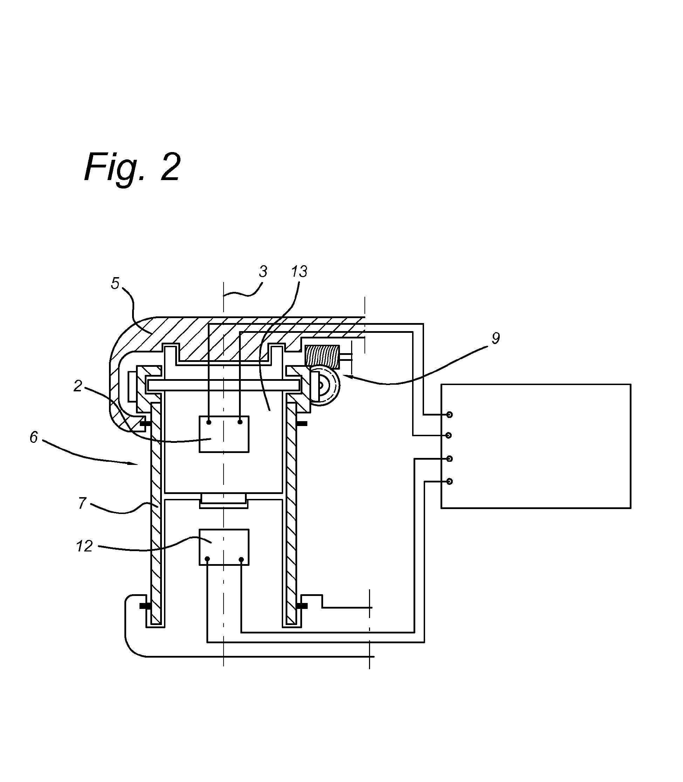

Fig. 2 shows a second embodiment of the vision system 1 according to the invention. Only differences with the first embodiment will be described. In fig. 1 the further image capturing device 12 is supported by a support member. The support frame 13 is hingeably coupled with the stationary housing part 5. In fig. 2 the support member and the hingeable support frame 13 are separate and the hingeable support frame 13 is enclosed between the support member and the stationary housing part 5.

### In use

In use of the vision system, cleaning of the entrance window 7 is achieved through rotating the second housing part 4 with respect to the first stationary housing part 5 for cleaning the entrance window 7 of the second housing part. The cleaning device 8 (not shown in fig. 2) performs cleaning action on the entrance window 7.

In use of the vision system 1, the angular position of the image capturing device 2 is adjusted for adjusting the view of the vision system 1.

The coupling device and the cam system enable different operational modes for the vision system. 1) The field of view shifts away from the vehicle and simultaneously the second housing part 4 rotates for cleaning action. 2) The field of view is determined in that cams do stop the hingeable support frame. The second housing part 4 may still rotate for cleaning action. 3) The field of view shifts towards the vehicle and simultaneously the second housing part 4 rotates for cleaning action. 4) The field of view is determined in that cams do stop the hingeable support frame. The second housing part 4 may still rotate for cleaning action.

It will also be obvious after the above description and drawings are included to illustrate some embodiments of the invention, and not to limit the scope of protection. Starting from this disclosure, many more embodiments will be evident to a skilled person which are within the scope of protection and the essence of this invention and which are obvious combinations of prior art techniques and the disclosure of this patent.

## Claims

1. Vision system (1) for providing exterior rear view for a vehicle driver, the system comprising;
- an image capturing device (2) supported by a hingeable support frame (13) for hinging the image capturing device around a central axis (3) of the vision system for adjusting the view of the vision system,
- a housing (6) for accommodating the image capturing device therein, the housing (6) comprising a first stationary housing part (5) and a second housing part (4) coupled with the first stationary housing part (5) for accommodating the image capturing device in the housing (6), and wherein the second housing part (4) comprises an entrance window (7) for allowing an image to be captured by the image capturing device, and wherein the second housing part (4) is moveable coupled with the first stationary housing part (5) for cleaning the entrance window (7) of the second housing part (4),
- a cleaning device (8) coupled with the first stationary housing part and arranged for cleaning the entrance window,
- a mechanical adjusting device (9) comprising a drive system (10) for adjusting the view of the vision system,
wherein the drive system is coupled with both the hingeable support frame for adjusting the angular position of the image capturing device, and with the second housing part for moving the entrance window with respect to the cleaning device.

2. Vision system according to claim 1, wherein the drive system is directly coupled with the second housing part.

3. Vision system according to claim 1 or 2, wherein the drive system is coupled with the hingeable support frame through a coupling device for uncoupling the drive system and the hingeable support frame when a desired field of view of the vision system is achieved.

4. Vision system according to claim 3, wherein the coupling device comprises a friction coupling system for uncoupling the drive system and the hingeable support frame when a support frame driving force exceeds a driving force threshold.

5. Vision system according to claim 3, comprising a cam system coupled with the hingeable support frame and the first stationary housing part the for imposing at least one angular position to the hingeable support frame for providing a desired field of view for the vision system.

6. Vision system according to a preceding claim, comprising a source of radiation for radiating the field of view, and wherein the entrance window comprises at least a first and a second entrance window section wherein the first entrance window section is suitable for use during daylight conditions and the second entrance window section is suitable for use in dim or darkness in conjunction with the source of radiation.

7. Vision system according to claim 6, comprising a control unit for controlling the position of the entrance window, wherein the image capturing device is operationally coupled with the control unit for providing a control signal from the image capturing signal to the control unit.

8. Vision system according to claim 7, wherein the source of radiation is operationally coupled with the control unit, and the source of radiation is arranged for allowing at least a part of emitted radiation to affect directly on the image capturing device through the entrance window.

9. Vision system according to claim 6, comprising a further image capturing device which is stationary arranged for providing a determined field of view.

10. Vision system according to claim 9, wherein the image capturing device and the further image capturing device are arranged such that the devices are aligned with the central axis.

11. Vision system according to a preceding claim, wherein the second housing part is gastight coupled with the first stationary housing part for filling the housing with gas, preferably for filling the housing with gas at an overpressure.

12. Vision system according to a preceding claim, wherein the second housing part (7) extends around the image capturing device (2, 12).

13. Vision system according to a preceding claim, wherein the second housing part (7) is provided with a curvature.

14. Vision system according to a preceding claim, wherein the second housing part extends circumferential around the image capturing device, and preferably the entrance window extends circumferential around the image capturing device.

15. Method for operating a vision system according to a preceding claim, comprising the steps;
- cleaning the entrance window through rotating the second housing part with respect to the first stationary housing part for cleaning the entrance window of the second housing part, and
- adjusting the angular position of the image capturing device for adjusting the view of the vision system.
